# FASCICULE DE BREVET EUROPEEN

(11) **EP 3 514 875 B1**
(45) Date de publication et mention de la délivrance du brevet: **25.03.2020**
(21) Numéro de dépôt: 18213560.8
(22) Date de dépôt: 18.12.2018
(51) Int. Cl.: H01M 8/241, H01M 8/249, H01M 8/1004, H01M 4/86, C25B 1/10, C25B 9/08, C25B 9/18, C25B 15/08, H01M 8/1018

(54) **ENSEMBLE DE CELLULES POUR ADAPTATION DE PUISSANCE DE REACTEURS ELECTROCHIMIQUES**
ANORDNUNG VON ZELLEN FÜR DIE LEISTUNGSANPASSUNG VON ELEKTROCHEMISCHEN REAKTOREN
CELLULAR ASSEMBLY FOR ADAPTING THE POWER OF ELECTROCHEMICAL REACTORS

(30) Priorité: 18.01.2018 FR 1850414
(43) Date de publication de la demande: 24.07.2019
(73) Titulaire: Commissariat à l'Énergie Atomique et aux Énergies Alternatives, 75015 Paris (FR)
(72) Inventeur: POIROT-CROUVEZIER, Jean-Philippe, 38450 SAINT GEORGES DE COMMIERS (FR)
(74) Mandataire: Guérin, Jean-Philippe

(56) Documents cités:
- EP-A1- 2 337 127
- WO-A1-2012/130932
- JP-A- 2013 085 999

## Description

L'invention concerne les réacteurs électrochimiques à membrane échangeuse de protons, tels que les électrolyseurs pour la production de dihydrogène par électrolyse de l'eau, ou les piles à combustible pour la production d'électricité.

Les réacteurs électrochimiques à membrane échangeuse de protons sont utilisés à une température de fonctionnement inférieure à 300°C. La membrane échangeuse de protons forme un électrolyte solide. Pour des applications basse température, on utilise généralement des membranes de type polybenzimidazole chargé en acide phosphorique.

En particulier, une pile à combustible inclut usuellement un empilement de cellules élémentaires dans lesquelles a lieu une réaction électrochimique entre deux réactifs qui sont introduits de manière continue. Le combustible est apporté au contact de l'anode, le comburant est amené au contact de la cathode.

La réaction est subdivisée en deux demi-réactions, qui ont lieu d'une part à l'interface anode/membrane et d'autre part à l'interface cathode/membrane. Les demi-réactions ne peuvent avoir lieu que s'il existe un conducteur ionique entre les deux électrodes et un conducteur électronique.

Les fluides sont amenés au contact des zones réactionnelles à partir de collecteurs d'entrée et de sortie qui traversent généralement l'empilement de part en part. Les fluides sont généralement guidés entre un collecteur et leur zone réactionnelle par des canaux d'écoulement d'une plaque bipolaire, ayant également une fonction de conduction électrique et une fonction de transmission d'un effort de serrage de l'empilement de cellules. Chaque collecteur est entouré d'un joint évitant le mélange des différents fluides circulant dans la pile à combustible.

Le dimensionnement d'un réacteur électrochimique inclut généralement une fixation préalable du nombre de cellules empilées et de leur surface active, en fonction de l'application finale visée. Les conditions de fonctionnement permettent de définir au préalable les performances intrinsèques des cellules au cours du fonctionnement. En testant une cellule électrochimique de référence, on définit une courbe de polarisation. Cette courbe de polarisation permet de connaître la tension de la cellule en fonction de la densité de courant, pour des conditions de fonctionnement données. Comme les cellules électrochimiques empilées sont identiques, cette courbe de polarisation permet de connaître les conditions de fonctionnement de l'ensemble des cellules.

Le choix du point de fonctionnement optimal pour une application donnée est généralement défini par un objectif de rendement énergétique, car la tension de cellule influe directement sur le rendement de la réaction électrochimique : plus la tension est basse, plus le dégagement de chaleur est élevé, au détriment du rendement électrique. Une tension et une densité de courant de cellule sont alors définies pour le point de fonctionnement optimal.

Le nombre de cellules empilées est défini par le rapport entre la tension totale pour l'application finale visée, et la tension pour le point de fonctionnement optimal d'une cellule unitaire. Comme les cellules électrochimiques empilées sont identiques, la surface active d'une cellule est définie par le rapport entre la puissance totale pour l'application finale visée et la densité de puissance pour le point de fonctionnement optimal. La géométrie de la surface active des assemblages membrane/électrodes, et donc la géométrie de leurs anodes et cathodes, peut alors être définie.

Une fois la géométrie de la surface active définie, on réalise la conception et le dimensionnement des plaques bipolaires. La position des collecteurs d'écoulement de fluide, des canaux de guidage d'écoulement et des joints est notamment définie.

Pour concevoir une pile à combustible pour une application spécifique, il est courant de réutiliser des conceptions existantes d'assemblages membrane/électrodes et de plaques bipolaires. Le dimensionnement porte alors essentiellement sur la définition de la surface active nécessaire pour l'application visée, et le choix d'un nombre de cellules électrochimiques à inclure dans l'empilement pour disposer de cette surface active.

Si l'on souhaite concevoir une nouvelle pile à combustible présentant une puissance accrue par rapport à une conception existante, il est généralement aisé d'accroître le nombre de cellules électrochimiques empilées et connectées en série, ou le nombre d'empilements connectés en parallèle.

Par contre, lorsque l'on souhaite concevoir une nouvelle pile à combustible présentant une puissance réduite par rapport à une conception existante il est courant de modifier le point de fonctionnement de cette nouvelle pile à combustible pour réduire la densité de courant produite par chaque cellule, et en accroissant sa tension de fonctionnement. Un tel changement du point de fonctionnement altère cependant l'utilisation de la pile à combustible. En effet, le débit massique des réactifs traversant chaque cellule est inférieur à celui pour lequel elle a été conçue. L'évacuation de l'eau produite dans chaque cellule électrochimique peut alors s'avérer problématique, en conduisant à un bouchage de canaux d'écoulement de réactif. Par ailleurs, si seule une des cellules électrochimiques présente un point de fonctionnement différent, il est délicat de gérer ce point de fonctionnement par rapport à celui des autres cellules électrochimiques.

En vue de résoudre ce problème, le document US6911277 propose d'insérer une chicane mobile dans un collecteur de réactif. Par un pilotage actif de la position de cette chicane mobile, on peut modifier l'alimentation en réactifs de différents canaux d'écoulement de la zone active en fonction des pertes de charges. Un tel contrôle actif est cependant complexe à gérer et constitue un facteur de panne additionnelle pour la pile à combustible. Le coût d'une telle pile à combustible rapporté à sa puissance s'avère également dégradé pour une telle solution, malgré la réutilisation de conceptions d'assemblages membrane/électrodes et de plaques bipolaires connues. Par ailleurs, l'accroissement de la tension de fonctionnement des cellules électrochimiques favorise des phénomènes de dégradation et réduisent alors leur durée de vie.

Le document JP2013/085999 décrit plusieurs cellules électrochimiques connectées en série pour traiter un flux gazeux.

Le document EP2337127 décrit une cellule électrochimique. La composition d'une cathode est hétérogène le long d'un chemin d'écoulement.

Le document WO2012/130932 décrit une cellule électrochimique. La composition d'une cathode est hétérogène le long d'un chemin d'écoulement.

L'invention vise à résoudre un ou plusieurs de ces inconvénients. L'invention porte ainsi sur un ensemble de cellules électrochimiques pour réacteur électrochimique, tel que défini dans les revendications annexées.

L'invention porte également sur les variantes des revendications dépendantes. L'homme du métier comprendra que chacune des caractéristiques des variantes des revendications dépendantes et de la description peut être combinée indépendamment aux caractéristiques d'une revendication indépendante, sans pour autant constituer une généralisation intermédiaire.

L'invention porte également sur un réacteur électrochimique, tel que défini dans les revendications annexées.

L'invention porte encore sur une pile à combustible, incluant un empilement de cellules électrochimiques, ledit empilement incluant un ensemble de cellules électrochimiques telles que définies précédemment.

D'autres caractéristiques et avantages de l'invention ressortiront clairement de la description qui en est faite ci-après, à titre indicatif et nullement limitatif, en référence aux dessins annexés, dans lesquels :
- la figure 1 est une vue en perspective éclatée d'un exemple d'empilement d'assemblages membrane/électrodes et de plaques bipolaires pour une pile à combustible ;
- la figure 2 est une vue en coupe d'un empilement pour une pile à combustible selon un mode de réalisation de l'invention ;
- la figure 3 est une vue d'une plaque bipolaire d'une pile à combustible selon un mode de réalisation de l'invention ;
- les figures 4 à 14 sont des vues de différentes configurations d'assemblages membrane/électrodes pour la mise en œuvre de l'invention.

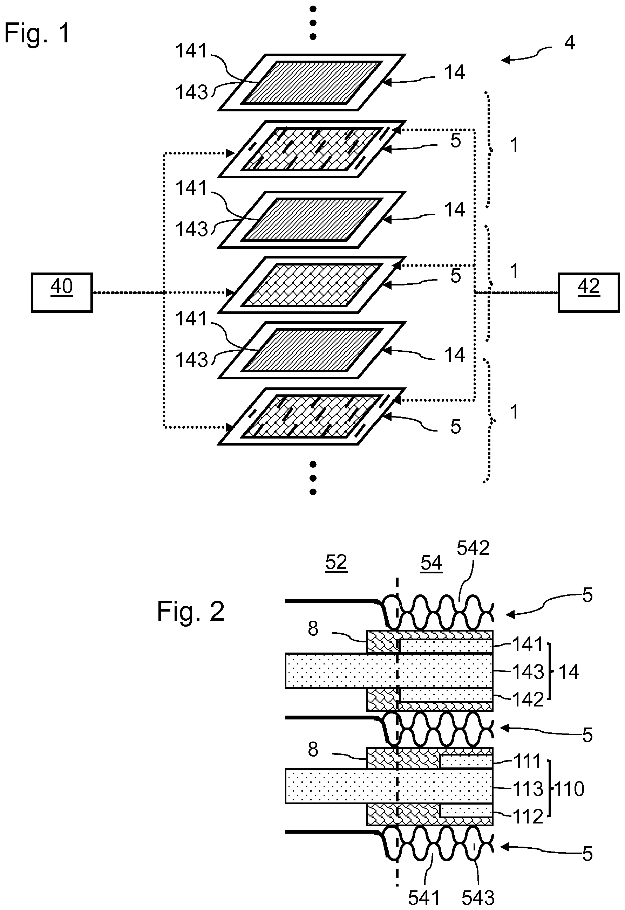

La figure 1 est une vue en perspective éclatée schématique d'un empilement de cellules 1 d'une pile à combustible 4. La pile à combustible 4 comprend plusieurs cellules 1 superposées. Les cellules 1 sont du type à membrane échangeuse de protons ou membrane à électrolyte polymère.

La pile à combustible 4 comprend une source de carburant 40. La source de carburant 40 alimente ici en dihydrogène une entrée de chaque cellule 1. La pile à combustible 4 comprend également une source de comburant 42. La source de comburant 42 alimente ici en air une entrée de chaque cellule 1, l'oxygène de l'air étant utilisé comme oxydant. Chaque cellule 1 comprend également des canaux d'échappement. Une ou plusieurs cellules 1 présentent également un circuit de refroidissement de la zone réactive.

Chaque cellule 1 comprend un assemblage membrane/électrodes 14 ou AME 14. Un assemblage membrane/électrodes 14 comprend un électrolyte solide 143, une cathode (non illustrée) et une anode 141 placées de part et d'autre de l'électrolyte et fixées sur cet électrolyte 143. La couche d'électrolyte 143 forme une membrane permettant une conduction protonique tout en étant imperméable aux gaz présents dans la cellule. La couche d'électrolyte empêche également un passage des électrons entre l'anode 141 et la cathode. L'électrolyte 143 est par exemple configuré pour être mis en œuvre à une température de fonctionnement supérieure à 100°C, typiquement une température de fonctionnement de 180°C. Un tel électrolyte 143 peut par exemple être en polybenzimidazole (PBI) dopé avec de l'acide phosphorique

Entre chaque couple d'AME adjacents, une plaque bipolaire 5 est disposée. Sur chaque face d'une AME, une plaque bipolaire 5 forme un guide d'écoulement de réactif pour une zone réactive. Chaque plaque bipolaire 5 définit ici des canaux d'écoulement anodiques et des canaux d'écoulement cathodiques sur des faces externes opposées. Des plaques bipolaires 5 définissent également des canaux d'écoulement de liquide de refroidissement entre deux assemblages membrane/électrodes successifs. Les plaques bipolaires 5 peuvent être formées chacune de façon connue en soi à partir de deux tôles métalliques conductrices assemblées, par exemple en acier inoxydable, ou en alliage de titane, en alliage d'aluminium, en alliage de nickel ou en alliage de tantale. Chaque tôle définit alors une face externe respective. Les plaques bipolaires 5 peuvent également être obtenues par tout autre procédé, par exemple le moulage ou l'injection à partir de composites carbone-polymère. Les plaques bipolaires 5 peuvent ainsi également être formées d'un seul tenant. Les faces externes de la plaque bipolaire 5 sont alors définies par une telle pièce d'un seul tenant. Chaque cellule 1 peut en outre comprendre une couche de diffusion de gaz (non illustrée) disposée entre l'anode et une plaque bipolaire, et une autre couche de diffusion de gaz disposée entre la cathode et une autre plaque bipolaire. Les assemblages membrane/électrodes 14 peuvent comporter des renforts, non illustrés ici.

De façon connue en soi, durant le fonctionnement de la pile à combustible 4, de l'air s'écoule entre un AME 14 et une plaque bipolaire 5, et du dihydrogène s'écoule entre cet AME 14 et une autre plaque bipolaire 5. Les plaques bipolaires 5 ont notamment une fonction de guidage d'écoulement des réactifs de part et d'autre de l'AME 14. Au niveau de l'anode, le dihydrogène est ionisé pour produire des protons qui traversent l'AME 14. Les électrons produits par cette réaction sont collectés par une plaque bipolaire 5. Les électrons produits sont ensuite appliqués sur une charge électrique connectée à la pile à combustible 4 pour former un courant électrique. Au niveau de la cathode, de l'oxygène est réduit et réagit avec les protons pour former de l'eau. Les réactions au niveau de l'anode et de la cathode sont régies comme suit :

2*H*₂ → 4*H*⁺ + 4*e*⁻ au niveau de l'anode ;

4*H*⁺ + 4*e*⁻ + *O*₂ → 2*H*₂*O* au niveau de la cathode.

Durant son fonctionnement, une cellule 1 de la pile à combustible 4 génère usuellement une tension continue entre l'anode et la cathode de l'ordre de 1V.

La source de comburant 42 comprend typiquement un compresseur pour introduire de l'air à une pression donnée à l'entrée des cellules 1. Un tel compresseur reçoit par exemple une consigne de pression d'air, la pression d'air pouvant être régulée par une vitesse de rotation variable du compresseur.

L'empilement des plaques bipolaires 5 et des assemblages membrane/électrodes 14 est destiné à former une pluralité de collecteurs d'écoulement. À cet effet, des orifices respectifs sont ménagés à travers les plaques bipolaires 5 et à travers les assemblages membrane/électrodes 14. Les orifices des plaques bipolaires 5 et des assemblages membrane/électrodes 14 sont disposés en vis-à-vis afin de former les différents collecteurs d'écoulement.

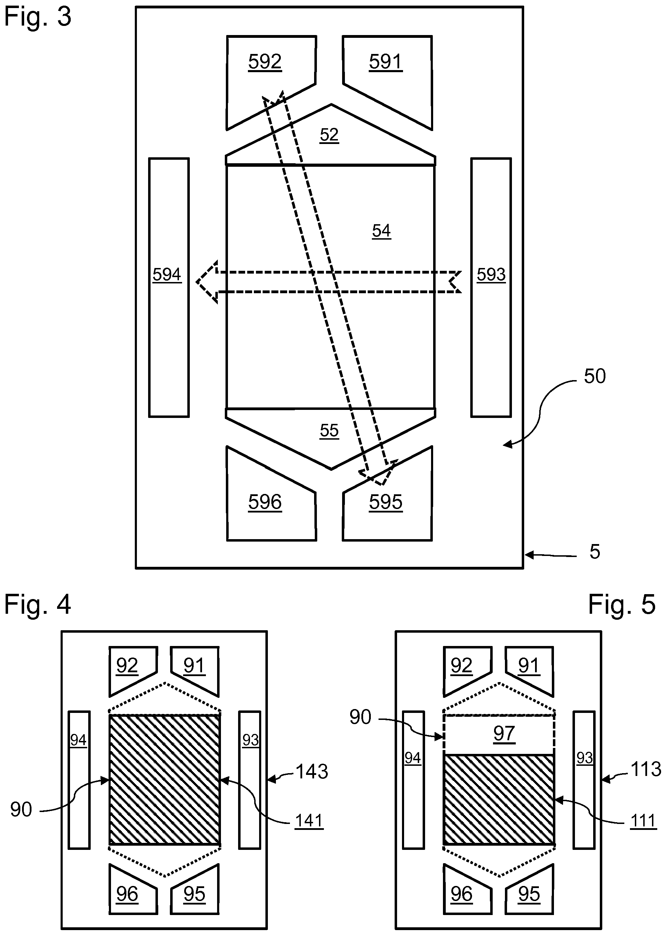

La figure 3 est une vue de dessus schématique d'une plaque bipolaire 5 donnée à titre d'exemple, pour une pile à combustible selon un mode de réalisation de l'invention. Une tôle 50 de la plaque bipolaire 5 est ainsi illustrée en vue de dessus. Des joints non illustrés sont plaqués contre une AME, non illustrée sur cette figure. La face illustrée de la tôle 50 est destinée à venir en vis-à-vis de l'anode d'un assemblage membrane/électrodes.

Les plaques bipolaires 5 comportent ainsi des orifices 591 et 592 au niveau d'une première extrémité longitudinale, et des orifices 595 et 596 au niveau d'une deuxième extrémité longitudinale. Dans une zone médiane 54, les plaques bipolaires 5 comportent un orifice 593 à proximité des orifices 591 et 592, et un orifice 594 à proximité des orifices 595 et 596.

L'orifice 591 sert par exemple pour former un collecteur d'alimentation en carburant, l'orifice 596 sert par exemple pour former un collecteur d'évacuation de résidus de combustion et de carburant non utilisé. L'orifice 593 sert par exemple pour former un collecteur d'alimentation en liquide de refroidissement pour la zone médiane 54, l'orifice 594 sert par exemple pour former un collecteur d'évacuation de ce liquide de refroidissement. L'orifice 592 sert par exemple pour former un collecteur d'alimentation en comburant, et l'orifice 595 sert par exemple pour former un collecteur d'évacuation d'eau produite et de comburant non utilisé. La zone médiane 54 correspond globalement à une zone réactive de la pile à combustible. La zone médiane 54 comporte des canaux d'écoulement. Une zone d'homogénéisation 52 est avantageusement formée entre la zone médiane et les orifices 591 et 592. Une zone d'homogénéisation 55 est avantageusement formée entre la zone médiane et les orifices 595 et 596.

Dans cet exemple, la direction générale d'écoulement de réactif (identifiée par la flèche reliant les orifices 592 et 595) est perpendiculaire à la direction d'écoulement de liquide de refroidissement (définie par une flèche reliant les orifices 593 et 594). L'invention s'applique bien entendu également pour des piles à combustible avec des directions d'écoulement de réactifs et de fluide de refroidissement différentes.

La figure 2 est une vue en coupe partielle d'un empilement de cellules électrochimiques d'une pile à combustible 4 selon un mode de réalisation de l'invention. Dans son empilement, la pile à combustible 4 comprend un ensemble de cellules électrochimiques d'au moins deux types.

La pile à combustible 4 comprend plusieurs cellules électrochimiques d'un premier type. Ces cellules électrochimiques sont destinées à fournir une puissance unitaire nominale pour leur point de fonctionnement. Chaque cellule électrochimique du premier type comprend un assemblage membrane/électrodes 14 présentant une anode 141, une cathode 142 et une membrane échangeuse de protons 143. L'anode 141 et la cathode 142 incluent de façon connue en soi des matériaux électrocatalytiques respectifs. Chaque cellule électrochimique du premier type est positionnée entre deux guides d'écoulement dans la zone réactive, ici définis par des faces de plaques bipolaires 5.

La pile à combustible 4 comprend par ailleurs une cellule électrochimique du deuxième type. La deuxième cellule électrochimique est destinée à fournir une puissance inférieure à celle des cellules électrochimiques du premier type. La cellule électrochimique du deuxième type comprend un assemblage membrane/électrodes 110 présentant une anode 111, une cathode 112 et une membrane échangeuse de protons 113. L'anode 111 et la cathode 112 incluent de façon connue en soi des matériaux électrocatalytiques respectifs. La cellule électrochimique du deuxième type est positionnée entre deux guides d'écoulement dans la zone réactive, ici définis par des faces de plaques bipolaires 5.

Chacune des plaques bipolaires 5 comporte des canaux d'écoulement 541 positionnés en vis-à-vis d'une anode, des canaux d'écoulement 542 positionnés en vis-à-vis d'une cathode, et des canaux d'écoulement 543 de fluide de refroidissement.

Des orifices des plaques bipolaires 5 et des assemblages membrane/électrodes 14 et 110 sont disposés en vis-à-vis afin de former les différents collecteurs d'écoulement.

Afin de pouvoir réduire le coût de fabrication de la pile à combustible 4, les guides d'écoulement des plaques bipolaires, définissant l'écoulement dans la zone réactive, présentent la même géométrie et la même composition dans les cellules électrochimiques du premier type et dans les cellules électrochimiques du second type. Les plaques bipolaires 5 peuvent ainsi différer dans leur géométrie et dans leur composition hors de la zone réactive. Les plaques bipolaires 5 présentent avantageusement la même géométrie et la même composition dans les cellules électrochimiques du premier type et dans les cellules électrochimiques du second type. De façon similaire, afin de réduire les coûts de fabrication, la membrane échangeuse de protons 113 présente la même géométrie et la même composition que les membranes échangeuses de protons 143. Une telle configuration permet également de ne pas altérer le comportement mécanique de l'empilement de la pile à combustible 4.

La différence de puissance entre les cellules du premier type et la cellule du deuxième type permet d'adapter finement la puissance de la pile à combustible 4 à une valeur souhaitée, ne correspondant pas à un multiple de la puissance nominale des cellules électrochimiques du premier type. La différence de puissance entre les cellules du premier type et la cellule du deuxième type est ici obtenue avec une anode 141 (et/ou une cathode 142) présentant une répartition de densité surfacique de matériau électro catalytique différente de celle de l'anode 111 (et/ou de celle de la cathode 112). Les anodes 111 et 141 incluent un même matériau électrocatalytique. Les cathodes 112 et 142 utilisent un même matériau électrocatalytique. Une telle configuration permet en outre de réduire la quantité de matériau électro catalytique utilisé pour l'anode 111 (et/ou pour la cathode 112), ce qui permet de réduire le coût d'un tel matériau, généralement coûteux.

En particulier, une telle différence de répartition de densité surfacique de matériau électro catalytique entre l'anode 111 et les anodes 141 (et/ou ou entre la cathode 112 et les cathodes 142) est obtenue en formant des anodes 141 (et/ou des cathodes 142) recouvrant intégralement une partie médiane de leur membrane échangeuse de protons 143, alors que la membrane échangeuse de protons 113 a une partie médiane présentant une zone non recouverte par l'anode 111 (et/ou par la cathode 112).

Une telle configuration permet par ailleurs d'utiliser un même point de fonctionnement (tension de cellule et densité de courant) pour l'ensemble des cellules électrochimiques. Ainsi, la puissance de la pile à combustible 4 peut être dimensionnée au plus juste sans nécessiter de gérer un point de fonctionnement distinct pour la cellule électrochimique incluant l'assemblage membrane/électrodes 110, et sans induire une dégradation accélérée de cette cellule électrochimique. Par ailleurs, du fait de la conservation de la géométrie des plaques bipolaires 5 et des membranes échangeuse de protons 143 et 113, des mêmes conditions d'écoulement sont obtenues à travers les cellules électrochimiques du premier type et à travers la cellule électrochimique du deuxième type.

La figure 4 est une vue de dessus schématique d'un exemple d'assemblage membrane/électrodes 14 pour une cellule électrochimique du premier type. Une partie médiane 90 de la membrane échangeuse de protons 143 est recouverte intégralement par l'anode 141. Cette partie médiane 90 est destinée à venir se superposer à la partie médiane 54 d'une plaque bipolaire 5 telle qu'illustrée à la figure 2. La membrane échangeuse de protons 143 comporte ici par ailleurs des orifices 91 à 96, destinés à venir se superposer respectivement avec les orifices 591 à 596 des plaques bipolaires 5. Sur une face opposée de la membrane échangeuse de protons 143, une cathode recouvre intégralement la partie médiane 90. En projection sur la membrane échangeuse de protons 143 selon une direction normale à celle-ci, l'anode 141 et la cathode 142 ont avantageusement une même forme : en effet, comme la surface de réaction électrochimique d'un assemblage membrane/électrodes correspond au recouvrement entre l'anode et la cathode, il est souhaitable d'optimiser cette surface de réaction en maximisant le recouvrement entre l'anode et la cathode.

Dans cet exemple, l'anode 141 et la cathode 142 ont une composition homogène et présentent ainsi des densités surfaciques respectives homogènes en matériaux électro catalytiques. Dans un souci de simplification, la géométrie de l'anode 141 est rectangulaire.

Les figures 5 à 14 sont des vues de dessus schématiques de différents exemples d'assemblages membrane/électrodes 113 pour une cellule électrochimique du deuxième type. Une partie médiane 90 de la membrane échangeuse de protons 113 est recouverte partiellement par l'anode 111. Une zone 97 de la partie médiane 90 n'est pas recouverte par l'anode 111. Sur une face opposée de la membrane échangeuse de protons 113, une cathode recouvre partiellement une zone de la partie médiane 90. La zone 97 de la partie médiane 90 n'est pas recouverte par cette cathode. En projection sur la membrane échangeuse de protons 113 selon une direction normale à celle-ci, l'anode 111 et la cathode 112 ont avantageusement une même forme. Par conséquent, dans les exemples qui suivent, seule la géométrie de l'anode 111 sera décrite.

Dans les exemples des figures 5 à 7, l'anode 111 est formée d'un seul tenant. L'anode 111 présente ici une composition homogène, avec une densité surfacique en matériau électro catalytique identique à celle de l'anode 141, sur la zone de la membrane 113 qu'elle recouvre. Une telle configuration est en particulier favorisée pour obtenir une contribution homogène de l'air introduit à la réaction électrochimique, et une réaction intégrale du comburant de cet air. En effet, il est souhaitable de consommer l'intégralité de l'oxygène de l'air introduit, afin de ne pas perdre inutilement de l'énergie pour comprimer de l'oxygène qui ne réagirait pas. Une telle configuration permet également d'homogénéiser la réaction électrochimique à l'anode, pour réduire le risque d'éventuels noyages de certaines zones d'écoulement.

Dans l'exemple de la figure 5, l'anode 111 est formée à proximité des orifices d'échappement 95 et 96. L'anode 111 se présente sous la forme d'une bande rectangulaire, dans le sens de la largeur de la zone réactive. On définira le sens de la largeur comme une direction perpendiculaire à une ligne reliant les orifices 591 et 596, et la longueur comme une direction parallèle à cette ligne reliant les orifices 591 et 592. La zone 97 est positionnée à proximité des orifices d'entrée 91 et 92.

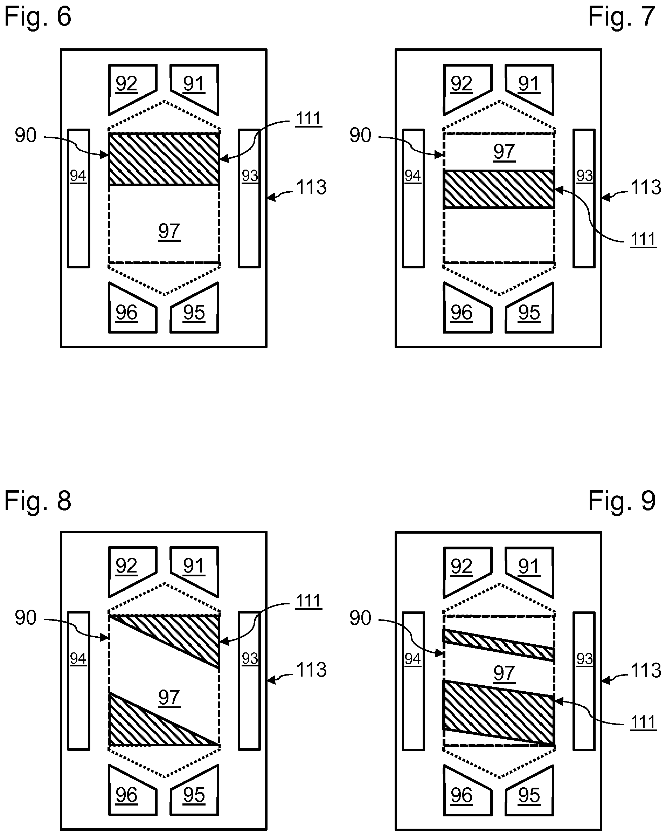

Dans l'exemple de la figure 6, l'anode 111 est formée à proximité des orifices d'entrée 91 et 92. L'anode 111 se présente sous la forme d'une bande rectangulaire, dans le sens de la largeur de la zone réactive. La zone 97 est positionnée à proximité des orifices d'échappement 95 et 96.

Dans l'exemple de la figure 7, l'anode 111 est formée sur une partie centrale deux la membrane échangeuse de protons 113, la zone 97 étant formée de part et d'autre de l'anode 111, à proximité des orifices d'entrée 91 et 92 d'une part et à proximité des orifices d'échappement 95 et 96 d'autre part. L'anode 111 se présente sous la forme d'une bande rectangulaire, dans le sens de la largeur de la zone réactive.

Dans les exemples des figures 8 à 10, l'anode 111 est formée en plusieurs éléments disjoints. L'anode 111 présente ici une composition homogène, avec une densité surfacique en matériau électro catalytique identique à celle de l'anode 141, sur la zone de la membrane 113 qu'elle recouvre. Une telle configuration est en particulier favorisée pour éviter une concentration de chaleur produite ou une concentration de puissance électrique produite. Une telle configuration permet alors soit de réduire les pertes électriques, soit d'homogénéiser le fonctionnement en étalant le gradient thermique de la chaleur produite par la réaction.

Dans l'exemple de la figure 8, l'anode 111 comporte un élément formé à proximité des orifices d'échappement 95 et 96 et un élément formé à proximité des orifices d'entrée 91 et 92. Les éléments de l'anode 111 sont séparés par une zone 97. Les éléments 111 se présentent sous la forme de triangles s'étendant dans le sens de la largeur de la zone réactive.

Dans l'exemple de la figure 9, l'anode 111 comporte un élément formé à proximité des orifices d'échappement 95 et 96 et un élément formé à proximité des orifices d'entrée 91 et 92. Les éléments de l'anode 111 sont séparés par une zone 97. Des zones 97 de forme triangulaire sont également formées à proximité des orifices d'échappement 95 et 96 d'une part, et à proximité des orifices d'entrée 91 et 92 d'autre part. Les éléments 111 se présentent sous la forme de trapèzes s'étendant dans le sens de la largeur de la zone réactive.

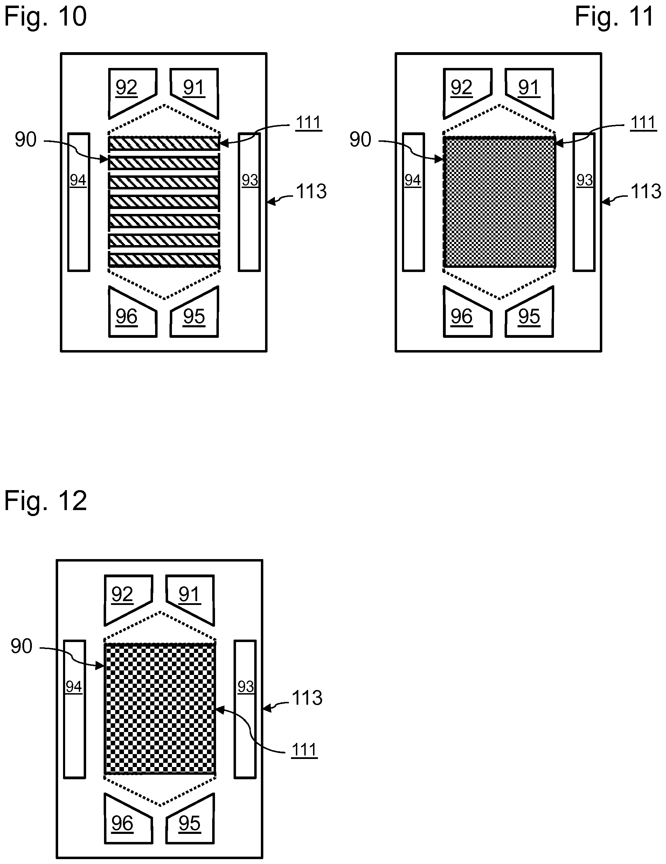

Dans l'exemple de la figure 10, l'anode 111 est formée par plusieurs bandes rectangulaires disjointes, réparties entre les orifices d'entrée 91 et 92 et les orifices d'échappement 95 et 96. L'anode 111 se présente sous la forme de bandes rectangulaires, s'étendant dans le sens de la largeur de la zone réactive. Les différentes bandes de l'anode 111 sont séparées par des zones 97.

Dans les exemples des figures 11 à 14, l'anode 111 est formée en insérant de multiples zones 97 réparties selon un motif dans l'anode 111. Les zones 97 peuvent par exemple être formées de petits évidements dans l'anode 111, par exemple rectangulaires ou circulaires. Les évidements sont avantageusement répartis de manière uniforme dans l'anode 111. Les évidements présentent avantageusement la même géométrie.

Dans l'exemple de la figure 11, la densité surfacique des évidements est relativement faible. La surface effective de l'anode 111 représente ici 80% de la surface de l'anode 141. L'anode 111 s'étend depuis la proximité des orifices d'entrée 91 et 92 jusqu'à la proximité des orifices d'échappement 95 et 96.

Dans l'exemple de la figure 12, la densité surfacique des évidements est relativement élevée. La surface effective de l'anode 111 représente ici 50% de la surface de l'anode 141. L'anode 111 s'étend depuis la proximité des orifices d'entrée 91 et 92 jusqu'à la proximité des orifices d'échappement 95 et 96.

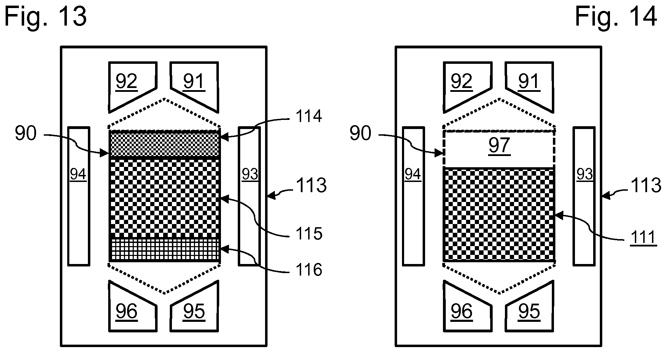

Dans l'exemple de la figure 13, plusieurs bandes 114 à 116 de l'anode 111 se succèdent entre les orifices d'entrée 91 et 92 et les orifices d'échappement 95 et 96. Les bandes 114 à 116 présentent des proportions différentes d'évidements des zones 97. Dans le cas présent, la bande 114 comporte une proportion d'évidements de 20% (structure identique à celle de l'exemple de la figure 11), la bande 115 comporte une proportion d'évidements de 50% (structure identique à celle de l'exemple de la figure 12) et la bande 116 comporte une proportion d'évidements de 80%. Une telle configuration permet par exemple de localiser la réaction électrochimique et le dégagement de chaleur dans des emplacements appropriés. Les différentes bandes 114 à 116 de l'anode 111 s'étendent dans le sens de la largeur de la zone réactive.

Dans l'exemple de la figure 14, l'anode 111 est formée à proximité des orifices d'échappement 95 et 96. L'anode 111 se présente sous la forme d'une bande rectangulaire, dans le sens de la largeur de la zone réactive. L'anode 111 présente ici la même structure d'évidements que l'exemple de la figure 11. Une zone 97 rectangulaire est également positionnée à proximité des orifices d'entrée 91 et 92, entre ces orifices d'entrée et l'anode 111.

Dans les exemples des figures 3 à 14, l'écoulement de réactif à travers les différents canaux d'écoulement 541 longe une même longueur d'anode 111, de sorte que la réaction électrochimique est sensiblement la même pour ces différents canaux d'écoulement 541.

On peut envisager la formation des anodes 111 et 141 et/ou des cathodes 112 et 142 par un procédé technologique connu en soi, par exemple la sérigraphie ou l'impression avec une encre électrocatalytique. De tels procédés technologiques s'avèrent par exemple particulièrement appropriés pour la réalisation d'évidements avec des motifs tels que décrits en référence au figures 11 à 14.

On peut également envisager de moduler l'épaisseur de l'anode 111 par rapport à l'épaisseur de l'anode 141, afin de différencier leurs densités surfaciques de matériau électrocatalytique. On peut également différencier la concentration en matériau électrocatalytique entre une encre déposée pour former l'anode 111 et une encre déposée pour former l'anode 141.

Avantageusement, une cellule électrochimique incluant une anode 111 est positionnée au niveau d'une extrémité de l'empilement. En effet, de telles cellules sont généralement mieux refroidies que les cellules du cœur de l'empilement, du fait de la convection naturelle aux extrémités de l'empilement. Comme une telle cellule électrochimique peut avoir un point de fonctionnement modifié, avec une densité de puissance supérieure et un rendement énergétique plus faible, la convection naturelle favorise le refroidissement de cette cellule qui présente production de chaleur plus importante.

L'invention a été décrite auparavant avec des plaques bipolaires formant des canaux d'écoulement anodiques et cathodiques. On peut cependant également envisager d'utiliser des plaques bipolaires présentant un réseau de type poreux formant des obstacles à l'écoulement des réactifs.

L'invention a été décrite précédemment pour une pile à combustible alimentée en carburant dihydrogène. L'invention s'applique bien entendu également à des piles à combustible utilisant d'autres types de combustible, par exemple du méthanol.

L'invention a été décrite auparavant pour une application à des piles à combustible. L'invention s'applique bien entendu également à d'autres réacteurs électrochimiques à membrane échangeuse de protons, par exemple des électrolyseurs. Dans un tel cas, les plaques bipolaires 5 peuvent être remplacées par des guides d'écoulement polarisés à des tensions d'électrolyse respectives.

L'invention a été décrite précédemment dans un exemple où un ensemble de cellules électrochimiques du premier type et du second type est inclus dans un même réacteur électrochimique. On peut cependant également envisager d'utiliser les cellules électrochimiques de premier type pour une première série de réacteurs électrochimiques et envisager d'utiliser les cellules électrochimiques du deuxième type pour une deuxième série de réacteurs électrochimiques différente. Ainsi, une unité de fabrication pourrait former ces deux séries de réacteurs présentant des performances de fonctionnement très différentes, tout en bénéficiant d'une conception et d'un approvisionnement identiques en membranes échangeuses de protons et en guides d'écoulement. Ces deux types de réacteurs électrochimiques pourraient bénéficier de tests de définition similaires de leurs points de fonctionnement et de leurs conditions d'écoulement de fluide.

Avantageusement, les cellules électrochimiques d'une même série de réacteurs électrochimiques sont alors identiques. En effet, si on superpose des cellules électrochimiques présentant une même répartition de la densité surfacique des matériaux électrocatalytiques, les densités de courant pour la réaction sont identiques dans l'empilement des cellules, ce qui évite de produire des courants électriques dans le plan des plaques bipolaires, à l'origine de pertes électriques.

Pour un réacteur électrochimique incluant des cellules électrochimiques du deuxième type, les conditions de fonctionnement de ces cellules peuvent être en pratique différentes de celles des cellules électrochimiques du premier type. Le fonctionnement de cellules électrochimiques du premier type est en particulier défini pour obtenir des conditions d'écoulement, en fonction de conditions de fonctionnement spécifiques de température, de pression, d'humidité relative, de rapport stœchiométrique, et de densité de courant. Ces conditions de fonctionnement permettent de calculer le débit de réactif circulant dans la cellule. La cellule est conçue pour évacuer correctement l'eau liquide produite par la réaction électrochimique dans une pile à combustible par exemple, et pouvant se trouver à l'anode comme à la cathode. Le principal critère permettant d'évaluer la capacité d'évacuation de l'eau liquide dans les canaux d'écoulement est la perte de charge dans l'écoulement. Si la perte de charge dans les canaux d'écoulement devient inférieure à un seuil, l'eau liquide ne peut plus être évacuée par le flux de réactif. En fonction de la section de passage des canaux d'écoulement, le seuil de perte de charge est généralement compris entre 10 et 100mbar.

Pour des cellules électrochimiques du deuxième type, avec des conditions de fonctionnement identiques, le débit massique de réactif pour une même densité de courant est également diminué dans la même proportion. Par conséquent, on peut alors changer un paramètre de fonctionnement pour conserver le débit volumique et ainsi le niveau de perte de charge identique pour les cellules électrochimiques du deuxième type et les cellules électrochimiques du premier type. Par exemple, si les cellules électrochimiques du premier type sont dimensionnées pour une pression de réactif de 2 bars, si la surface des anodes des cellules électrochimiques du deuxième type est réduite à 60% de la surface des anodes des cellules électrochimiques du premier type, la pression de réactif pour les cellules électrochimiques du deuxième type peut être réduite à 1,2 bar, afin de diminuer le débit massique dans la même proportion, tout en conservant le débit volumique et la perte de charge.

## Revendications

1. Ensemble de cellules électrochimiques (1) pour réacteur électrochimique (4), comprenant :
- une première cellule électrochimique, incluant :
- un premier assemblage membrane/électrodes (14) comprenant une première membrane échangeuse de protons (143), une première anode (141) et une première cathode positionnées de part et d'autre de la membrane échangeuse de protons et incluant chacune un matériau électrocatalytique ;
- des premier et deuxième guides d'écoulement (5) positionnés de part et d'autre du premier assemblage membrane/électrodes (14) ;
- une deuxième cellule électrochimique, incluant :
- un deuxième assemblage membrane/électrodes (110) comprenant une deuxième membrane échangeuse de protons (113), une deuxième anode (111) et une deuxième cathode positionnées de part et d'autre de la membrane échangeuse de protons et incluant chacune un matériau électrocatalytique ;
- des troisième et quatrième guides d'écoulement (5) positionnés de part et d'autre du deuxième assemblage membrane/électrodes (113) ;
- **caractérisé en ce que** :
- les premier et troisième guides d'écoulement présentent une même géométrie ;
- les deuxième et quatrième guides d'écoulement présentent une même géométrie ;
- la première anode (141) et la deuxième anode (111) présentent des répartitions de densités surfaciques de matériau électrocatalytique différentes sur des faces respectives des première et deuxième membranes échangeuses de protons, ou la première cathode (142) et la deuxième cathode (112) présentent des répartitions de densités surfaciques de matériau électrocatalytique différentes sur des faces respectives des première et deuxième membranes échangeuses de protons (143,113), la première membrane échangeuse de protons (143) comportant une partie médiane (90) intégralement recouverte par la première anode (141) et par la première cathode (142), la deuxième membrane échangeuse de protons (113) comportant une partie médiane (90) présentant une zone (97) non recouverte par la deuxième anode (111) et par la deuxième cathode (112).

2. Ensemble de cellules électrochimiques (1) selon la revendication 1, dans lequel la première anode et la deuxième anode incluent un même matériau électrocatalytique, et dans lequel la première cathode et la deuxième cathode incluent un même matériau électrocatalytique.

3. Ensemble de cellules électrochimiques (1) selon l'une quelconque des revendications précédentes, dans lequel la deuxième anode (111) et la deuxième cathode (112) ont une même forme en projection selon une normale à la deuxième membrane échangeuse de protons (113).

4. Ensemble de cellules électrochimiques (1) selon l'une quelconque des revendications précédentes, dans lequel au moins une partie de ladite zone non recouverte (97) est définie par de multiples évidements de la deuxième anode et de la deuxième cathode, lesdits évidements étant répartis de manière uniforme dans la deuxième anode et dans la deuxième cathode.

5. Ensemble de cellules électrochimiques (1) selon la revendication 4, dans lequel lesdits évidements présentent une même géométrie.

6. Ensemble de cellules électrochimiques (1) selon l'une quelconque des revendications 1 à 3, dans lequel ladite zone non recouverte (97) est définie par au moins un évidement de la deuxième anode et un évidement de la deuxième cathode s'étendant sur toute la largeur de celles-ci.

7. Ensemble de cellules électrochimiques (1) selon l'une quelconque des revendications précédentes, dans lequel la deuxième anode recouvre une surface de la deuxième membrane échangeuse de protons comprise entre 10 et 80% de la surface de recouvrement de la première membrane échangeuse de protons par la première anode.

8. Ensemble de cellules électrochimiques (1) selon l'une quelconque des revendications précédentes, dans lequel ladite deuxième anode est formée d'un seul tenant, et dans lequel ladite deuxième cathode est formée d'un seul tenant.

9. Ensemble de cellules électrochimiques (1) selon l'une quelconque des revendications 1 à 7, dans lequel ladite deuxième anode est formée en plusieurs éléments disjoints, et dans lequel ladite deuxième cathode est formée en plusieurs éléments disjoints.

10. Ensemble de cellules électrochimiques (1) selon la revendication 8 ou 9, dans lequel :
- les premier et troisième guides d'écoulement comportent des canaux d'écoulement, l'écoulement à travers ces différents canaux d'écoulement longeant une même longueur de l'anode ;
ou les deuxième et quatrième guides d'écoulement comportent des canaux d'écoulement, l'écoulement à travers ces différents canaux d'écoulement longeant une même longueur de la cathode.

11. Ensemble de cellules électrochimiques (1) selon l'une quelconque des revendications précédentes, dans lequel la deuxième anode présente au moins une partie s'étendant sur la même largeur que la première anode.

12. Réacteur électrochimique (4), incluant un empilement de cellules électrochimiques, ledit empilement incluant un ensemble de cellules électrochimiques (1) selon l'une quelconque des revendications précédentes.

13. Pile à combustible, incluant un empilement de cellules électrochimiques, ledit empilement incluant un ensemble de cellules électrochimiques selon l'une quelconque des revendications 1 à 11.

## Patentansprüche

1. Anordnung elektrochemischer Zellen (1) für einen elektrochemischen Reaktor (4), umfassend:
- eine erste elektrochemische Zelle, aufweisend:
- einen ersten Aufbau von Membran/Elektroden (14), umfassend eine erste Protonenaustauschermembran (143), eine erste Anode (141) und eine erste Kathode, die auf beiden Seiten der Protonenaustauschermembran positioniert sind und jeweils ein elektrokatalytisches Material aufweisen;
- eine erste und zweite Strömungsführung (5), die auf beiden Seiten des ersten Aufbaus von Membran/Elektroden (14) positioniert sind;
- eine zweite elektrochemische Zelle, aufweisend:
- einen zweiten Aufbau von Membran/Elektroden (110), umfassend eine zweite Protonenaustauschermembran (113), eine zweite Anode (111) und eine zweite Kathode, die auf beiden Seiten der Protonenaustauschermembran positioniert sind und jeweils ein elektrokatalytisches Material aufweisen;
- eine dritte und vierte Strömungsführung (5), die auf beiden Seiten des zweiten Aufbaus von Membran/Elektroden (113) positioniert sind;
- **dadurch gekennzeichnet, dass**:
- die erste und dritte Strömungsführung dieselbe Geometrie haben;
- die zweite und vierte Strömungsführung dieselbe Geometrie haben;
- die erste Anode (141) und die zweite Anode (111) verschiedene Oberflächendichteverteilungen elektrokatalytischer Materialien auf den jeweiligen Flächen der ersten und zweiten Protonenaustauschermembran haben, oder die erste Kathode (142) und die zweite Kathode (112) verschiedene Oberflächendichteverteilungen elektrokatalytischer Materialien auf jeweiligen Flächen der ersten und zweiten Protonenaustauschermembran (143, 113) haben, wobei die erste Protonenaustauschermembran (143) einen mittleren Teil (90) umfasst, der vollständig von der ersten Anode (141) und von der ersten Kathode (142) bedeckt ist, wobei die zweite Protonenaustauschermembran (113) einen mittleren Teil (90) umfasst, der eine Zone (97) hat, die nicht von der zweiten Anode (111) und von der zweiten Kathode (112) bedeckt ist.

2. Anordnung elektrochemischer Zellen (1) nach Anspruch 1, wobei die erste Anode und die zweite Anode dasselbe elektrokatalytische Material aufweisen, und wobei die erste Kathode und die zweite Kathode dasselbe elektrokatalytische Material aufweisen.

3. Anordnung elektrochemischer Zellen (1) nach einem der vorhergehenden Ansprüche, wobei die zweite Anode (111) und die zweite Kathode (112) dieselbe Form in Projektion in einer Normalen zu der zweiten Protonenaustauschermembran (113) haben.

4. Anordnung elektrochemischer Zellen (1) nach einem der vorhergehenden Ansprüche, wobei mindestens ein Teil der nicht bedeckten Zone (97) durch mehrere Ausnehmungen der zweiten Anode und der zweiten Kathode definiert wird, wobei die Ausnehmungen gleichmäßig in der zweiten Anode und in der zweiten Kathode verteilt sind.

5. Anordnung elektrochemischer Zellen (1) nach Anspruch 4, wobei die Ausnehmungen dieselbe Geometrie haben.

6. Anordnung elektrochemischer Zellen (1) nach einem der Ansprüche 1 bis 3, wobei die nicht bedeckte Zone (97) durch mindestens eine Ausnehmung der zweiten Anode und eine Ausnehmung der zweiten Kathode definiert wird, die sich über die gesamte Länge dieser erstrecken.

7. Anordnung elektrochemischer Zellen (1) nach einem der vorhergehenden Ansprüche, wobei die zweite Anode eine Oberfläche der zweiten Protonenaustauschermembran zwischen 10 und 80 % der Oberfläche der Bedeckung der ersten Protonenaustauschermembran durch die erste Anode bedeckt.

8. Anordnung elektrochemischer Zellen (1) nach einem der vorhergehenden Ansprüche, wobei die zweite Anode aus einem einzigen Stück gebildet ist, und wobei die zweite Kathode aus einem einzigen Stück gebildet ist.

9. Anordnung elektrochemischer Zellen (1) nach einem der Ansprüche 1 bis 7, wobei die zweite Anode aus mehreren getrennten Elementen gebildet ist, und wobei die zweite Kathode aus mehreren getrennten Elementen gebildet ist.

10. Anordnung elektrochemischer Zellen (1) nach Anspruch 8 oder 9, wobei:
- die erste und dritte Strömungsführung Strömungskanäle umfassen, wobei die Strömung quer durch diese verschiedenen Strömungskanäle über dieselbe Länge der Anode verläuft;
oder die zweite und vierte Strömungsführung Strömungskanäle umfassen, wobei die Strömung quer durch diese verschiedenen Strömungskanäle über dieselbe Länge der Kathode verläuft.

11. Anordnung elektrochemischer Zellen (1) nach einem der vorhergehenden Ansprüche, wobei die zweite Anode mindestens einen Teil hat, der sich über dieselbe Breite erstreckt wie die erste Anode.

12. Elektrochemischer Reaktor (4), welcher einen Stapel elektrochemischer Zellen aufweist, wobei der Stapel eine Anordnung elektrochemischer Zellen (1) nach einem der vorhergehenden Ansprüche aufweist.

13. Brennstoffzelle, welche einen Stapel elektrochemischer Zellen aufweist, wobei der Stapel eine Anordnung elektrochemischer Zellen nach einem der Ansprüche 1 bis 11 aufweist.

## Claims

1. Assembly of electrochemical cells (1) for an electrochemical reactor (4), comprising:
- a first electrochemical cell, including:
- a first membrane/electrode assembly (14) comprising a first proton exchange membrane (143), a first anode (141) and a first cathode positioned on either side of the proton exchange membrane and each including an electrocatalytic material;
- first and second flow guides (5) positioned on either side of the first membrane/electrode assembly (14);
- a second electrochemical cell, including:
- a second membrane/electrode assembly (110) comprising a second proton exchange membrane (113), a second anode (111) and a second cathode positioned on either side of the proton exchange membrane and each including an electrocatalytic material;
- third and fourth flow guides (5) positioned on either side of the second membrane/electrode assembly (113);
- **characterized in that**:
- the first and third flow guides have one and the same geometry;
- the second and fourth flow guides have one and the same geometry;
- the first anode (141) and the second anode (111) have different distributions of surface densities of electrocatalytic material on respective faces of the first and second proton exchange membranes, or the first cathode (142) and the second cathode (112) have different distributions of surface densities of electrocatalytic material on respective faces of the first and second proton exchange membranes (143, 113), the first proton exchange membrane (143) comprising a central portion (90) completely covered by the first anode (141) and by the first cathode (142), the second proton exchange membrane (113) comprising a central portion (90) having a zone (97) not covered by the second anode (111) and by the second cathode (112).

2. Assembly of electrochemical cells (1) according to Claim 1, in which the first anode and the second anode include one and the same electrocatalytic material, and in which the first cathode and the second cathode include one and the same electrocatalytic material.

3. Assembly of electrochemical cells (1) according to any one of the preceding claims, in which the second anode (111) and the second cathode (112) have an identical shape in projection according to a normal to the second proton exchange membrane (113).

4. Assembly of electrochemical cells (1) according to any one of the preceding claims, in which at least part of said zone that is not covered (97) is defined by multiple recesses of the second anode and second cathode, said recesses being distributed uniformly in the second anode and in the second cathode.

5. Assembly of electrochemical cells (1) according to Claim 4, in which said recesses have one and the same geometry.

6. Assembly of electrochemical cells (1) according to any one of Claims 1 to 3, in which said zone that is not covered (97) is defined by at least one recess of the second anode and one recess of the second cathode extending over the full width of the latter.

7. Assembly of electrochemical cells (1) according to any one of the preceding claims, in which the second anode covers a surface area of the second proton exchange membrane between 10 and 80% of the area of overlap of the first proton exchange membrane by the first anode.

8. Assembly of electrochemical cells (1) according to any one of the preceding claims, in which said second anode is formed in a single piece, and in which said second cathode is formed in a single piece.

9. Assembly of electrochemical cells (1) according to any one of Claims 1 to 7, in which said second anode is formed of several separate elements, and in which said second cathode is formed of several separate elements.

10. Assembly of electrochemical cells (1) according to Claim 8 or 9, in which:
- the first and third flow guides comprise flow channels, flow through these different flow channels running along one and the same length of the anode;
or the second and fourth flow guides comprise flow channels, flow through these different flow channels running along one and the same length of the cathode.

11. Assembly of electrochemical cells (1) according to any one of the preceding claims, in which the second anode has at least one part extending over the same width as the first anode.

12. Electrochemical reactor (4), including a stack of electrochemical cells, said stack including an assembly of electrochemical cells (1) according to any one of the preceding claims.

13. Fuel cell, including a stack of electrochemical cells, said stack including an assembly of electrochemical cells according to any one of Claims 1 to 11.
